# EUROPEAN PATENT SPECIFICATION

(11) **EP 2 207 433 B1**
(45) Date of publication and mention of the grant of the patent: **26.06.2013**
(21) Application number: 08836323.9
(22) Date of filing: 30.09.2008
(51) Int. Cl.: A23L 1/164, A21D 13/00, A23L 1/10

(54) **Method of producing cooked cereal grains**
Herstellung gekochter Getreidekörner
Procédé de fabrication de grains de céréales cuits

(30) Priority: 30.09.2007 US 976458 P
(43) Date of publication of application: 21.07.2010
(73) Proprietor: Kellogg Company, Battle Creek, MI 49016-3599 (US)
(72) Inventor: BELANGER, Michael, E., Richland MI 49083 (US); BROOKS, Douglas, Eugene, Ceresco MI 49033 (US); RUHLMAN, Maria, Denelle, Battle Creek MI 49017 (US); TAHIR, Zarini, M., Kalamazoo MI 49001 (US)
(74) Representative: Monzón de la Flor, Luis Miguel
(86) International application number: PCT/US2008/078237
(87) International publication number: WO 2009/045991

(56) References cited:
- US-A1- 2006 246 195
- US-B1- 6 287 626
- US-B1- 6 387 435
- DATABASE GNPD [Online] Mintel; 1 May 1998 (1998-05-01), Anonymous: "Blé Dur Orge-Avoine", XP002630744, retrieved from www.gnpd.com Database accession no. 62168
- Robin Asbell: "The New Whole Grain Cookbook: Terrific Recipes Using Farro, Quinoa, Brown Rice, Barley, and Many Other Delicious and Nutritious Grains", 31 August 2007 (2007-08-31), Chronicle Books, XP002630745, pages 20-21, * the whole document *
- FAST R B ET AL: "Breakfast Cereals and How They Are Made, passage", 1 January 1990 (1990-01-01), BREAKFAST CEREALS AND HOW THEY ARE MADE, MINNESOTA, AACC, US, PAGE(S) 35 - 39, XP002392362, * pages 37-38 *
- LORRAINE L. NIBA: "Resistant starch: a potential functional food ingredient", NUTRITION & FOOD SCIENCE, vol. 32, no. 2, 1 January 2002 (2002-01-01), XP009146641,
- ANNISON G ET AL: "Nutritional role of resistant starch: Chemical structure vs. physiological function", ANNUAL REVIEW OF NUTRITION, ANNUAL REVIEWS INC., PALO ALTO, CA, US, vol. 14, 1 January 1994 (1994-01-01), pages 297-320, XP002488858, ISSN: 0199-9885, DOI: DOI:10.1146/ANNUREV.NU.14.070194.001501

## Description

### BACKGROUND OF THE INVENTION

### 1. Field of the Invention

The invention relates to a method of producing cooked cereal grains containing a high level of whole oats for the shredded ready-to-eat cereal.

### 2. Description of Related Prior Art

Shredded cereals are known in the art, particularly shredded whole wheat cereals. In shredding, the base material is milled into fine fibers and the fibers are overlaid with respect to one another to form a sheet. The sheets are then overlaid with respect to one another and the resulting laminate is then cut into individual RTE cereal pieces.

The value of oat grains, particularly oat groats, has long been appreciated. Oat groats are high in protein and are a good source of vitamins and minerals. However, difficulties are encountered in the production of oat food products having desired qualities from the standpoint of the consumer. For example, oat foods have a tendency when cooked to paste or form lumps. These tendencies have made the shredding of oats difficult.

This problem was addressed in U.S. Pat. No. 4,734,294 (hereinafter the '294 patent) to Spiel et al. The '294 patent discloses a process for the production of shredded oat food products, such as ready-to-cat breakfast cereals having the shredded appearance and texture of shredded whole wheat. The '294 patent was concerned with white streaks or spots in the final product, which resulted from uncooked or overcooked grains. To solve the problem, the '294 patent pressure cooked the oats in at least two stages in order to prepare the oats for a mixture for shredding.

This problem was further addressed in U.S. Pat. No. 4,497,840 (hereinafter the '840 patent) to Gould et al. The '840 patent discloses the use of multiple mechanical means, such as, an extruder and a series of mills to produce a homogenous oat bran mixture for shredding. The cooked, shredded oat bran in accordance with the '840 patent is eminently suitable for use as an "instant" cereal food product. The product was not a shredded wheat-like biscuit.

In the state of the art there are another documents related to the object of the present invention, such as the patent US 6287626, the document US 6387 435 B1, the article retrieved from DATABASE GNPD, Mintel; "Blé Dur Orge-Avoine" database accession n° 62168 and the patent US 2006246195 A1.

In the patent US 6287626wherein is disclosed a method of processing multiple whole grain mixtures and products therefrom. A whole grain product is described having a moisture content of from 40-80%. The product is prepared by cooking the grains in water for 5-90 minutes at a temperature of 80-150 DEG C. Next, the grains are rinsed with cool water to remove excess starch and stop the cooking process.

In the document US 6387 435 B1, is disclosed a waxy hull-less barley product having a moisture content of from 50-75%. The product is prepared by cooking the grains in water for 15-120 minutes at a temperature of 75-150 DEG C. Next, the grains are rinsed with cool water to remove excess starch and stop the cooking process.

in US 2006246195 A1 is disclosed shredded whole grain products, such as ready-to-eat cereals, and sweet and savory snacks, such as whole grain shredded corn chips are continuously produced by pelletizing agglomerates of cooked, tempered, whole cereal grain particles.

### SUMMARY OF THE INVENTION

In summary, the present invention is a method of producing cooked cereal grains containing a high level of whole oats for a shredded ready-to-eat cereal. The method begins by disposing a whole grain oat into a mixer. The whole grain oat has an exposed first starch. Next, a second whole grain being any wheat is disposed into the mixer. The second whole grain has an exposed second starch that is different from the first starch. A third starch which is a resistant starch is disposed into the mixer to act as a binder of the whole grain oat and second whole grain. Water is added to the mixer to form a mixture that is cooked to form the cooked cereal grains containing a high level of whole oats. The grains are shredded and layered to form a shredded wheat-like biscuit.

### BRIEF DESCRIPTION OF THE DRAWING

Advantages of the present invention will be readily appreciated as the same becomes better understood by reference to the following detailed description when considered in connection with the accompanying drawings wherein;

FIG. 1 is a schematic for a process to produce the RTE cereal piece according to an exemplary embodiment of the invention;

FIG. 2 is a simplified flow diagram illustrating the steps of the process as claimed.

FIG. 3 is a perspective view of a product produced in an exemplary embodiment of the subject invention; and

FIG. 4 is a side view of the product shown in FIG. 4 and having an internal filling.

### DETAILED DESCRIPTION OF THE EXEMPLARY EMBODIMENT

A ready-to-eat (RTE) cereal piece 20 according to the exemplary embodiment of the invention is formed from a whole grain oat, a second whole grain and resistant starch. The whole grain oat portion of the RTE cereal piece 20 is generally in the form of whole oat groats, but may include bran in combination with the oat groats. The whole grain oat portion of the RTE cereal piece 20 imparts desirable levels of Beta-glucan to the RTE cereal piece 20. The selection between groats and bran or the ratio of a combination of groats and bran can be made in view of the desired level of Beta-glucan in the RTE cereal piece 20. It is also noted that forms of bran other than oat bran can be used to practice the invention, such as whole white wheat bran, corn bran and red wheat bran. For a combination, the ratio can be selected in view of the manufacturability of the combination, for making a shredded RTE cereal piece 20. For example, Beta-glucan is relatively more concentrated in oat bran than in groats; therefore it may be desirable to include oat bran with oat groats to boost Beta-glucan content.

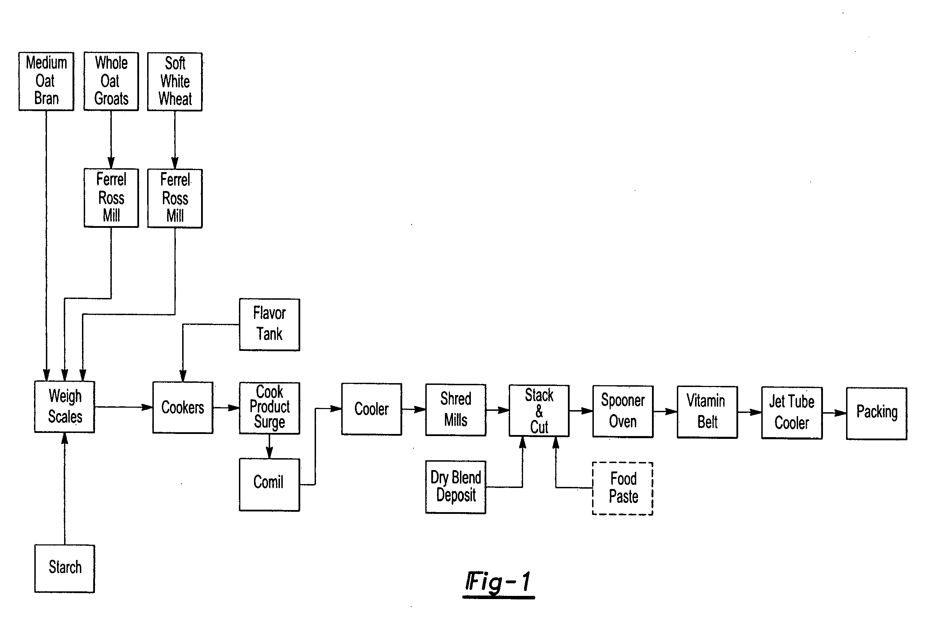

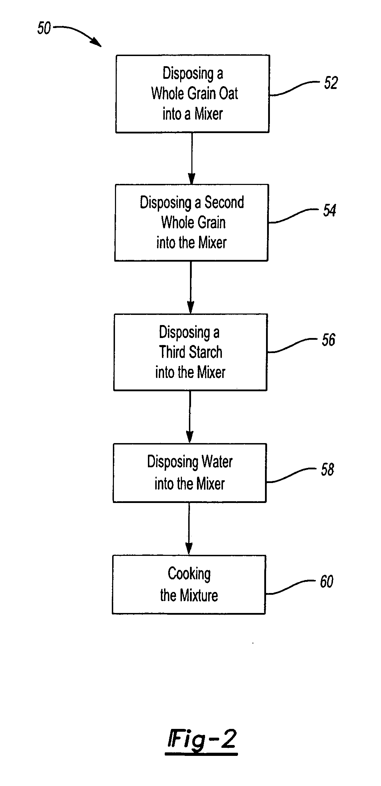

FIGS. 1 and 2 show an exemplary process schematic and a method flow chart of an exemplary embodiment of the invention. The method 50 of producing cooked cereal grains containing a high level of whole oats for a shredded ready-to-eat cereal begins with the step 52 of disposing the whole grain oat with an exposed first starch into a mixer. A separate mixer may be used to mix the ingredient prior to cooking, or the ingredients may be mixed in the cooker prior to cooking. In step 54 of the exemplary embodiment, a second whole grain with an exposed second starch is disposed into the mixer. The second starch is different from the first starch.

In the exemplary embodiment, the whole grain oat is oat groats and the second whole grain is soft white wheat. The whole grain oat portion of the RTE cereal piece 20 is generally oat groats, but may be any oat product known in the art. The second whole grain portion of the RTE cereal piece 20 is generally a wheat but can be in any wheat known in the art, including but not limited to, soft white wheat.

The oat groats and soft white wheat are processed, such as milled or cut, to expose the first and second starches to be combined with a third starch. In the exemplary embodiment a Ferrel Ross mill may be used to mill or cut the oat groats and soft white wheat. Any mill or cutter known in the art may be used to mill, cut or bump the oat groats and soft white wheat. Additionally, both the oat groats and wheat may be purchased with the first and second starches already exposed. For example, one may purchase a stabilized oat ingredient. For example, oats may be stabilized by steaming dehulled, whole or dried oat groats which generally contain on the order of 10%-12% moisture for a suitable period. The oat groats are steamed in suitable steaming equipment at temperatures of 98,88°C to 101.66°C ( 210[deg.] F.-215[deg.] F.) and pressures of 1.013 to 1.241 var (14.7 to 18 psi) After steaming, the oat kernels are passed through "bump" rolls with the clearance between the rolls being sufficient to break or fracture the kernels but insufficient to roll the oat kernels. Bumping of the oat kernels expose the first starch. The oat kernels may be bumped, milled or cut after they are purchased to further expose the first starch. Additionally, the pre-cut wheat may be bumped, milled or cut after it is purchased to further expose the second starch.

The whole grain oat, more specifically, the milled oat groats constitute 25% 60%, preferably 42%-46% of the mixture on a dry weight basis. Oat bran may be combined with the milled oat groats and the oat bran alone can constitute 3%-5% of the mixture on a dry weight basis. Oat bran is used in limited amounts, if at all, because it is enriched in protein, fat, crude fiber, ash, dietary fiber and gum content which affect the shreddability of the mixture. In addition to the optional oat bran, any ingredient known in the art to be difficult to shred, such as soybeans or other legumes, may be added to the mixture.

The second whole grain or milled wheat portion, more specifically, the milled soft white wheat constitutes 20%-45%, preferably 35%-39% of the mixture on a dry weight basis. It is preferred that the whole grain oat constitutes a greater portion of the mixture than the second whole grain. Inclusion of the second whole grain, wheat, is desirable to enhance the shredability of the mixture.

In step 56 of the exemplary method, a third starch is disposed into the mixer to bind the whole grain oat and second whole grain. The third starch constitutes 2%-20%, preferably 8%-15% of the mixture on a dry weight basis. The third starch of the RTE cereal piece 20 can be any resistant starch known in the art, including but not limited to corn starches such as Resistant Corn, Hi-Maze 260 and Resistant Corn, Hi-Maze 220. National Starch describes Hi-maize 220 as an unmodified high amylose corn starch which contains approximately 70% amylose. Hi-maize 220 is used in a variety of food applications where it contributes dietary fiber. National Starch further describes Hi-maize 220 as a resistant starch. A portion of this starch is resistant to digestion in the small intestine and is subsequently fermented in the large intestine. In this way, Hi-maize 220 displays some of the physiological aspects of dietary fiber. Hi-maize 220 is technically classified as an RS2-type resistant starch. Inclusion of the third starch is desirable to enhance the shredability of the mixture. Resistant starches are preferred because they are low in protein, fat, and ash which affect the shredability of a mixture. The inclusion of this resistant third starch solves the problem of lumps and paste in preparing high oat containing cooked grains and allows for a shredded product.

The method of the exemplary embodiment, includes the optional step of adding an additive to the mixture. The additive may include any additive known in the art, including but not limited to, nutritional supplements such as vitamins and minerals, flavoring enhancers such as salt, and sweeteners such as sugar or corn syrup, artificial sweeteners, soybeans or legumes. Any ingredient commonly included in shredded cereals can be added to the mixture of the exemplary embodiment as desired.

In step 58 of the exemplary method, water is disposed into the mixer to from a mixture. Water constitutes 25%-45%, more preferably 26%-30% of the mixture by weight.

In step 60 of the exemplary method, the mixture is cooked to form the cooked cereal grains. The mixture is cooked in a primary cooker. Any cooker known in the art may be used, including but not limited to a rotary cooker. The mixture is cooked to a temperature of 93.33 °C- 104.44°C (200[deg.] F.-220[deg.] F)., preferably to 98.88°C to 101.11°C (210[deg.] F.-214[deg.] F). so not to overgelatinize the starches in the mixture. The moisture content of the cooked cereal grains following cooking is 32%-48%, preferably 36%-42%.

The cooked cereal grains are then conveyed/surged to a comil. where the cooked cereal grains are separated into pieces or smaller units of cooked grains. The mass is separated to distribute the cooked grains into more workable size pieces for shredding. The cooked mass may be separated into smaller units by any method known in the art. The comil. can also enhance the distribution of the third starch in the mixture.

Next, the smaller units of cooked cereal grains may be cooled prior to shredding. Cooling may be accomplished by any means known in the art. In an exemplary embodiment, the smaller units of cooked grains are cooled by convection with ambient air. However, the cooling can also be achieved by a cooling conveyor belt or by other suitable cooling methods.

The cooled, smaller units of cooked grains are then shredded. The smaller units of cooked grains may be shredded by any means known in the art of shredding. Shredding systems which can be used in the process of the present invention may comprise conventional rolls and devices such as that indicated in U.S. Pat. No. 4,004,035 to Hirzel et al., which is hereby incorporated by reference in its entirety.

The Hirzel patent discloses a shredding system having one or more conventional shredding mills comprising a pair of closely spaced rolls. The rolls are rotated toward one another, and cooked cereal grains are passed therebetween causing the cooked cereal grains to be elongated into a plurality of individual strands or shreds. The resulting stream of shredded material is layered or stacked and cut into individual RTE cereal pieces 20. The individual shreds are then lapped or layered to form the sheets of layered shreds. A typical biscuit, for example, may contain up to 21 individual layers of shreds. Upon obtaining the requisite thickness, the sheeted shreds may be cut transversely and longitudinally into multiple lines of biscuits or individual RTE cereal pieces 20 in any known manner.

The oat particles are transferred to a series of conventional shredding rolls or mills via flow tubes or hoppers. The shreds, which can be produced in the form of net-like sheets by each set of shredding rolls, are layered, cut, dried, baked, toasted, and then the pieces are packaged all in a known manner as for the production of shredded whole wheat biscuits.

During stacking or layering, an enhancer 22, such as an additive or filling, to enhance flavoring, nutritional value or appearance of the ultimately produced RTE cereal piece 20 can be injected or inserted between the layers of individual stranded shreds. Dry blend and food paste enhancers 22 are shown in the exemplary schematic and may be applied by any method known in the art. For example, the enhancers 22 may be applied by a plurality of equi-spaced discharge tubes that extend from a header and supply spaced continuous longitudinal ribbons of filling between the layer of individual stranded shreds. Other types of filling devices may be employed, including a device for depositing a sheet of fill material uniformly across the individual stranded shreds, or a device for applying intermittent deposits of material.

The individual RTE cereal pieces 20 are then dried and toasted in a spooner oven. Exemplary of the types of dryers which can be used to additionally dry the individual RTE cereal pieces 20 are belt or conveyor dryers, vacuum dryers and the like. In the exemplary embodiment, the individual RTE cereal pieces 20 are toasted or heated in a spooner oven, but any oven known in the art may be used.

After the individual RTE cereal pieces 20 have been toasted, a second additive may be added to the individual RTE cereal pieces 20. For example, the individual RTE cereal pieces 20 may be ran along a vitamin belt where they are sprayed with flavoring, artificial sweeteners, and/or sweeteners, such as frosting.

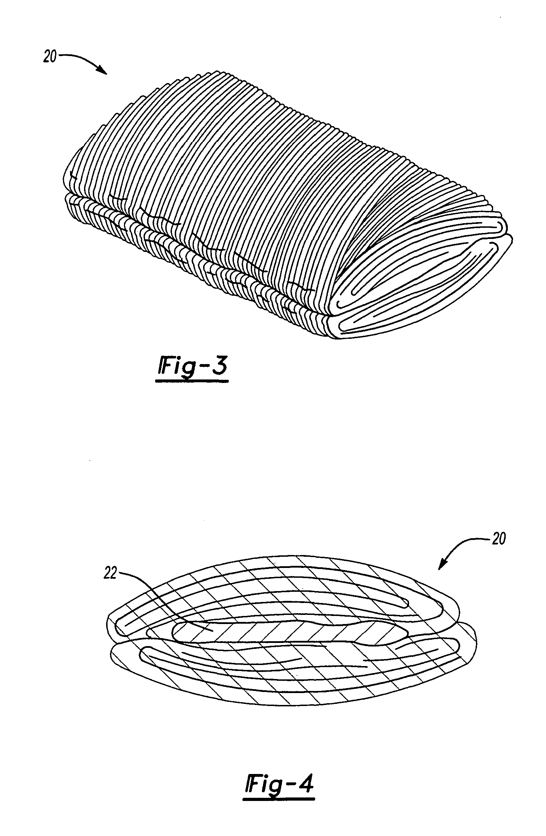

The individual RTE cereal pieces 20 are then cooled and packaged. Cooling may be accomplished by any means known in the art. In an exemplary embodiment, the individual RTE cereal pieces 20 cooled by convection with ambient air. However, the cooling can also be achieved by a cooling conveyor belt or by other suitable cooling methods. The final individual RTE cereal pieces 20 have a shredded-like appearance as shown in FIGS. 3 and 4.

The RTE cereal pieces 20 produced by the exemplary process comprise Beta-glucan in an amount greater than 0% [0034] The RTE cereal pieces 20 produced by the exemplary process comprise Beta-glucan in an amount greater than 0% and less than 15%, by weight of the RTE cereal piece 20. It is believed that the RTE cereal pieces 20 produced by the exemplary process comprises Beta-glucan in an amount of 3% to 7%. Thus, the RTE cereal 20 produced by the exemplary process is distinguished over shredded wheat RTE cereal pieces 20 by the inclusion of whole grain oat. The RTE cereal pieces 20 produced by the exemplary process is also distinguished over shredded wheat RTE cereal pieces by providing an alternative texture and taste.

## Claims

1. A method of producing cooked cereal grains containing whole oats for a shredded ready-to-eat cereal comprising the steps of:
- First disposing a whole grain oat having a first starch into a mixer;
- Next, disposing a second whole grain, being any wheat, having a second starch different from the first starch into the mixer;
- Then, disposing a third starch, -which is a resistant starch, into the mixer to bind the whole grain oat and the second whole grain;
- After, disposing water in the mixer to form a mixture; and
- Finally, cooking the mixture to form the cooked cereal grains.
Wherein the whole grain oat constitutes 25% - 60%, of the mixture on a dry weight basis.

2. The method as set forth in claim 1 further comprising the step of milling the whole grain oat to expose the first starch prior to the disposing the whole grain oat into the mixer step.

3. The method as set forth in claim 1 further comprising the step of milling the second whole grain to expose the second starch prior to the disposing the second whole grain into the mixer step.

4. The method as set forth in claim 1 wherein the second whole grain constitutes 20% - 45% of the mixture on a dry weight basis.

5. The method as set forth in claim 1 wherein the whole grain oat constitutes a greater portion of the mixture than the second whole grain.

6. The method as set forth in claim 1 wherein the disposing the third starch step is further defined as disposing a corn starch into the mixer to bind the whole grain oat and second whole grain.

7. The method as set forth in claim 1 wherein the corn starch is a high amylose corn starch.

8. The method as set forth in claim 1 wherein the third starch constitutes 2% - 20% of the mixture on a dry weight basis.

9. The method as set forth in claim 1 wherein the cooking the mixture step is further defined as cooking the mixture to form the cooked cereal grains having a moisture content of 32% - 44%.

## Patentansprüche

1. Verfahren zur Herstellung gekochter Getreidekörner, die Vollhafer enthalten, für ein zerkleinertes Fertiggetreide, umfassend die Schritte:
- Zuerst einen eine erste Stärke enthaltenden Vollkornhafer in einen Mischer geben;
- anschließend ein zweites Vollkorn, das Weizen ist und eine zweite Stärke enthält, die sich von der ersten Stärke unterscheidet, in den Mischer geben;
- danach eine dritte Stärke, die eine resistente Stärke ist, in den Mischer geben, um den Vollkornhafer und das zweite Vollkorn zu binden;
- daraufhin Wasser in den Mischer geben, um eine Mischung zu erzeugen; und
- zuletzt die Mischung kochen, um die gekochten Getreidekörner zu erzeugen,
wobei der Vollkornhafer 25% bis 60% der Mischung, bezogen auf das Trockengewicht, ausmacht.

2. Verfahren nach Anspruch 1, das weiterhin den Schritt des Mahlens des Vollkornhafers umfasst, um die erste Stärke freizulegen, bevor der Vollkornhafer dem Mischschritt zugeführt wird.

3. Verfahren nach Anspruch 1, das weiterhin den Schritt des Mahlens des zweiten Vollkorns umfasst, um die zweite Stärke freizulegen, bevor das zweite Vollkorn dem Mischschritt zugeführt wird.

4. Verfahren nach Anspruch 1, wobei das zweite Vollkorn 20% bis 45% der Mischung, bezogen auf das Trockengewicht, ausmacht.

5. Verfahren nach Anspruch 1, wobei der Vollkornhafer einen größeren Anteil an der Mischung ausmacht als das zweite Vollkorn.

6. Verfahren nach Anspruch 1, wobei der Schritt der Zugabe der dritten Stärke weiterhin als Zugabe einer Maisstärke in den Mischer zum Binden des Vollkornhafers und des zweiten Vollkorns definiert ist.

7. Verfahren nach Anspruch 1, wobei die Maisstärke eine amylosereiche Maisstärke ist.

8. Verfahren nach Anspruch 1, wobei die dritte Stärke 2% bis 20% der Mischung, bezogen auf das Trockengewicht, ausmacht.

9. Verfahren nach Anspruch 1, wobei der Schritt des Kochens der Mischung weiterhin als Kochen der Mischung zur Erzeugung der gekochten Getreidekörner mit einem Feuchtigkeitsgehalt von 32% bis 44% definiert ist.

## Revendications

1. Un procédé de production de grains de céréales cuits contenant des avoines entières pour une céréale en flocons prête à manger comprenant les étapes consistant à :
- D'abord mettre une avoine en grain entier possédant un premier amidon dans un mixeur ;
- Ensuite, mettre un deuxième grain entier, étant de n'importe quel blé, possédant un deuxième amidon différent du premier amidon dans le mixeur ;
- Puis mettre un troisième amidon, -qui est un amidon résistant, dans le mixer pour lier l'avoine en grain entier et le deuxième grain entier ;
- Après, mettre de l'eau dans le mixer pour former un mélange ; et
- Enfin, cuire le mélange pour former les grains de céréales cuits.
Dans lequel l'avoine en grain entier constitue 25% - 60% du mélange sur la base d'un poids sec.

2. Le procédé tel que présenté dans la revendication 1, comprenant en outre l'étape de mouture de l'avoine en grain entier pour exposer le premier amidon avant de mettre l'avoine en grain entier dans l'étape du mixer.

3. Le procédé tel que présenté dans la revendication 1, comprenant en outre l'étape de mouture du deuxième grain entier pour exposer le deuxième amidon avant de mettre le deuxième grain entier dans l'étape du mixer.

4. Le procédé tel que présenté dans la revendication 1, dans lequel le deuxième grain entier constitue 20% - 45% du mélange sur la base d'un poids sec.

5. Le procédé tel que présenté dans la revendication 1, dans lequel l'avoine en grain entier constitue une part du mélange plus grande que celle du deuxième grain entier.

6. Le procédé tel que présenté dans la revendication 1, dans lequel l'étape où l'on met le troisième amidon est de plus définie comme la mise d'un amidon de maïs dans le mixer pour lier l'avoine en grain entier et le deuxième grain entier.

7. Le procédé tel que présenté dans la revendication 1, dans lequel l'amidon de maïs est un amidon de maïs à haute teneur en amylose.

8. Le procédé tel que présenté dans la revendication 1, dans lequel le troisième amidon constitue 2% - 20% du mélange sur la base d'un poids sec.

9. Le procédé tel que présenté dans la revendication 1, dans lequel l'étape de cuisson du mélange est de plus définie comme la cuisson du mélange pour former les grains de céréales cuits ayant une teneur en humidité de 32% - 44%.
